# EUROPEAN PATENT SPECIFICATION

(11) **EP 2 522 953 B1**
(45) Date of publication and mention of the grant of the patent: **09.07.2014**
(21) Application number: 12167256.2
(22) Date of filing: 09.05.2012
(51) Int. Cl.: G01C 13/00, G01N 11/14

(54) **Method and device for determining the nautical depth of a water mass**
Verfahren und Vorrichtung zur Bestimmung der nautischen Tiefe einer Wassermasse
Méthode et dispositif pour déterminer la profondeur nautique d'une masse d'eau

(30) Priority: 09.05.2011 BE 201100281
(43) Date of publication of application: 14.11.2012
(73) Proprietor: Baggerwerken Decloedt en Zoon N.V., 8400 Oostende (BE)
(72) Inventor: Verboomen, Bart Peter, B9521 Sint-Lievens-Houtem (BE); Paridaens, Kobe, B8400 Oostende (BE)
(74) Representative: Brouwer, Hendrik Rogier

(56) References cited:
- EP-A1- 0 207 038
- BE-A2- 901 687
- BE-A3- 1 015 072
- BE-A3- 1 018 192
- DE-A1- 4 443 536
- JP-A- 6 160 091

## Description

The invention relates to a method and device for determining the nautical depth of a water mass such as a water channel or harbour.

Silt formation in water channels and harbours is a generally known phenomenon whereby the depth of the water layer in a water channel decreases in the course of time. The silt formation is particularly considerable at bends and in the vicinity of obstacles, but also in the vicinity of locations where salt water comes into contact with fresh water, as for instance at the mouths of rivers.

Three layers can generally be distinguished in a water channel in depth direction: an upper water layer which is well navigable, a soft silt layer thereunder in which a vessel is obstructed to some extent, and under this a hard silt layer. The water layer and the soft silt layer form a navigable upper layer. It is of great importance for shipping to be able to precisely determine the thickness of this upper layer. A ship which extends with its keel into the hard silt layer will encounter major disruption as a result or even become substantially uncontrollable, so this is a situation which must preferably be avoided.

In the context of the present application nautical depth is understood to mean the thickness of the navigable upper layer, in other words the distance between the free water surface and the hard silt layer.

A known method and device for determining the thickness of a navigable upper layer of a water channel is described in EP-A-0207038. The method and device described in this document are based on density measurements of the relevant water channel layers, particularly of the soft and hard silt layers. Although density measurements give a reasonable insight into the navigable depth of the water channel - and therefore also into the necessity of dredging this water channel - this measurement is not always found to be reliable. A density of about 1.2 is thus still deemed navigable, but the transition from the soft to the hard silt layer can take place over a great difference in depth at which the measured densities lie around 1.2.

JP 6160091 A (D1) discloses a method and device for determining the characteristics of a sludge layer in a water mass. A measuring body suspended from a wire is dipped under water at a certain depth, the measuring body comprising a cylindrical sealed body from which an impeller protrudes. The impeller is rotatably driven by a DC motor. The measuring body further comprises a depth detector.

An object of the present invention is therefore to provide a method and device of the type stated in the preamble with which the nautical depth of a water channel can be determined more accurately than has heretofore been possible.

The invention provides for this purpose a method wherein
- a measuring body is immersed in the fluid mass to a determined depth;
- the depth position of the measuring body is determined;
   and which is characterized in that
- the measuring body is set into a number of differing stationary movements at the depth position;
- the energies required for these movements are measured; and
- the nautical depth is determined from the measured movements, the energies required therefore and the depth position of the measuring body.

In order to determine the nautical depth the measuring body is generally carried to a depth position between a position in the soft silt layer and a position in the hard silt layer. Setting the measuring body into movement at a predetermined depth position requires a determined energy, which will be greater in the hard silt layer than in the soft silt layer and is likewise greater in the soft silt layer than in the water layer, among other reasons because the mass density of these layers differs. Measuring the energy required for the movement provides information about the rheological properties of the water mass at the level of the depth position. By simultaneously measuring the depth at which the measuring body is located and by repeating the measurements at different depths, the depth of the hard silt layer (in other words the nautical depth) can be determined in accurate manner on the basis hereof. It has been found that the method according to the invention allows more accurate determining of this depth than is the case with the known method making use of density measurements.

According to the invention the measuring body is set into a number of mutually different movements at a determined depth position of the measuring body. This movement is autonomous, in other words independent of a possible movement of components connected to the measuring body, such as a suspension or connection to a vessel, as will be further elucidated hereinbelow. The number of movements is at least two but will usually comprise at least 5 and more preferably at least 10. With differing movements are understood movements that differ in the speed of movement.

According to an embodiment of the method according to the invention, the movement comprises a rotation at a determined rotation speed around a rotation shaft of the measuring body, and the force required for this movement is measured. The measurement of the force can be performed in any way known to the skilled person and can, if desired, be derived from the measurement of another physical quantity, such as the torque required for the rotation or the electric current required to maintain the rotation.

According to a further embodiment of the method according to the invention, the movement comprises a rotation around a rotation shaft of the measuring body brought about by a determined force, and the rotation speed of this movement is measured. This embodiment is particularly advantageous when the layer in which measurement takes place becomes more solid. It is also possible to switch during the measurements from the above described embodiment to the present embodiment, or vice versa.

According to another possible embodiment of the method according to the invention, the rotation speed or force at the depth position is held at differing constant values and the nautical depth is determined from the evolution of the measured movements or of the energies required therefor as a function of the constant values. An even more accurate measurement of the nautical depth is obtained by determining the evolution of the measured quantities as a function of the rotation speed or of the force per depth position. This has great advantages because it is for instance possible to ascertain with more certainty whether a vessel is able to navigate through a water channel or whether it is necessary to deepen the relevant water channel by means of dredging and other deepening methods.

Yet another embodiment according to the invention is **characterized in that** an apparent viscosity of the relevant layer is determined from the measured movement and the energy required therefor. Such an apparent viscosity is obtained by dividing the force by the velocity and by multiplying this quotient if desired by a function dependent on, among other factors, the geometry of the measuring body and on for instance the flow direction.

In another embodiment of the invented method the depth position of the measuring body is determined by measuring the static water pressure at the relevant depth position. The nautical depth can be determined in simple manner by determining the depth of the measuring body by means of a measurement of the static water pressure (which depends on the depth position of the measuring body) and combining this measurement with the rheological measurements.

The measuring body can be introduced into the water mass in essentially any manner. It is however advantageous for the invented method to be **characterized in that** the measuring body is introduced into the water mass by means of a support structure connected to a vessel. Using the vessel the measuring body can easily be placed at any desired position, wherein the support structure can provide for an accurate positioning of the measuring body, both in the depth and in the two-dimensional plane (length and width).

A relatively rapid measurement of the nautical depth can be obtained in that the measuring body is lowered into the water mass at a predetermined speed by the support structure and the rheological measurements are regularly repeated. A substantially continuous rheological profile can in this way be obtained as a function of the depth of the measuring body.

In order to obtain a two-dimensional image of the nautical depth, for instance a two-dimensional image of a navigation channel, the above described measurements are repeated for different positions of the measuring body in the two-dimensional plane. According to an embodiment of the method according to the invention, the measurements can be repeated at discrete positions in the two-dimensional plane.

In another embodiment of the method according to the invention the measuring body is pulled along in the water mass by the support structure at a predetermined speed in the navigating direction of the vessel. The measuring body is here set into the above described autonomous movement at the depth positions thus occupied, and the energy required for this movement is measured. This preferably takes place continuously, i.e. a measurement is performed at regular points in time, for instance every second. It will be apparent that in this embodiment the measuring body (and an optional surrounding protective construction) will not be located at the same depth at all times but will be at different depths, this depending on, among other factors, the rheological properties of the water mass surrounding the measuring body at that moment. In addition to the drag force, an upward directed thrust (lifting force) and a downward directed force - the resultant of the gravitational force and the Archimedean force -also act on the measuring body and an optional protective construction. These forces determine the position of equilibrium in the depth direction of the measuring body, wherein the form and/or the weight of the measuring body and the optional protective construction can, if desired, be adapted to the nature of the layers and/or to the speed of movement used to place the measuring body in relatively simple manner in a stable position of equilibrium.

The present embodiment allows a complete mapping of the rheological properties of the water mass for determined depths to be performed in a relatively short period of time. The nautical depth can be determined in accurate manner on the basis hereof.

In the above stated embodiment the measuring body is preferably introduced into the water mass using a flexible cable so that the measuring body can set itself relatively freely at a determined depth position - depending on the rheological properties of the water mass. In addition to the above stated cable, it is also possible to apply other moving means, which can comprise both pulling means, such as the cable or a tow rope, and pushing means.

An alternative embodiment of the method according to the invention has the feature that the support structure comprises a structure with bending stiffness so that the measuring body is moved forward at a predetermined depth. Not only does this provide a simple way of measuring the depth of the measuring body, it also achieves that the measurements are performed at the same depth. In an embodiment in which the measuring body is pulled along in the water mass at a predetermined speed in the navigation direction of the vessel by the support structure, it is thus possible to fully map the rheological properties of the water mass for the same depth in a relatively short period of time.

The invention also relates to a device of the type described in the preamble, which is distinguished in that the device comprises a measuring body and means for immersing the measuring body in the water mass at a determined depth, preferably between a position in the soft silt layer and a position in the hard silt layer; means for determining the depth position of the measuring body; means for setting the measuring body into a number of different movements at the depth position; means for measuring the energies required for these movements; and computing means for determining the nautical depth from the measured movements, the energies required therefor and the depth position of the measuring body.

The moving means are preferably a vessel with a tow cable, to the outer end of which the measuring body is attached.

According to a possible embodiment of the device according to the invention, the means for setting the measuring body into movement comprise means for setting the measuring body into rotation at a determined rotation speed around a rotation shaft of the measuring body; and the means for measuring the energy required for this movement comprise means for measuring the force required for this movement.

In another embodiment of the device according to the invention the means for setting the measuring body into movement comprise means for setting the measuring body into rotation around a rotation shaft of the measuring body by means of a determined force, and the means for measuring the energy required for this movement comprise means for measuring the rotation speed of this movement.

In yet another embodiment of the invention, a device is provided wherein the means for setting the measuring body into rotation at a determined rotation speed around a rotation shaft or the means for setting the measuring body into rotation around a rotation shaft of the measuring body by means of a determined force are adapted to hold the determined rotation speed or force at the depth position at differing constant values and the nautical depth is determined from the measured movements and the energies required therefor per constant value.

As already elucidated above, it is advantageous for the device according to the invention to comprise static water pressure measuring means, such as a pressure sensor for measuring the depth position of the measuring body. Such a pressure sensor is preferably applied in combination with a vertical tube to which the pressure sensor is connected, wherein the tube ensures that the pressure sensor remains in contact with the water above and does not come into contact with possible silt (which has a density other than water). Measurement of the water pressure is in this way guaranteed. The measured water pressure can be converted in simple manner to the depth.

The measuring body is preferably connected to a vessel by means of a support structure with which the measuring body can be introduced into the water mass. According to a possible embodiment of the device according to the invention, the support structure comprises a flexible cable with which the measuring body can freely set itself to a determined depth position. In another embodiment the support structure comprises a structure with bending stiffness, such as for instance a rod or lattice, with which the measuring body can be moved forward by the vessel at a predetermined adjustable depth.

The form of the measuring body can be varied within wide limits. Good results are obtained with a measuring body in the form of a single or double cone. Bodies in the form of a single or double screw are also possible. In addition, it is possible to give the measuring body the form of a tube, the inner surface of which is accessible to the fluid and which is preferably rotated around its axis of symmetry. Yet another option comprises a measuring body in the form of an assembly of a plate and a cone. The plate will generally be held stationary and the cone rotated. The intermediate space between plate and cone is accessible to the fluid. It will be apparent that the form and geometry of the measuring body can be adapted in simple manner to the operating conditions and to the nature of the upper and lower layers.

It is further advantageous to protect the measuring body from waste, rocks, animals and the like present in the water mass. The device is provided for this purpose with a protective construction for the measuring body. This can for instance be done by accommodating the measuring body in a protective cage which is water-permeable.

It will further be apparent that the invention is not limited to the use of one measuring body, but that a plurality of bodies can be applied simultaneously as desired.

In an embodiment wherein the measuring body is pulled along by a vessel it can further be advantageous to streamline the protective construction, for instance by providing it with a wing element in order to obtain a controllable lift as the measuring body is pulled through the water mass. The protective construction can for instance thus be provided with a keel element for the purpose of increasing or reducing the drag force exerted on the protective construction during pulling.

The invention will now be further elucidated with reference to the following figures, without otherwise being limited thereto. In the figures:
- figure 1 shows schematically the different layers typically present in a water channel, harbour, dock, ...; and the variation in the mass density and the measured force in these layers;
- figure 2 is a schematic side view of an embodiment of a vessel with measuring body according to the invention;
- figure 3 is a schematic side view of an embodiment of a protective construction in which a measuring body is accommodated; and
- figure 4 shows a schematic measuring curve of an apparent viscosity plotted against the rotation speed set at a determined depth.

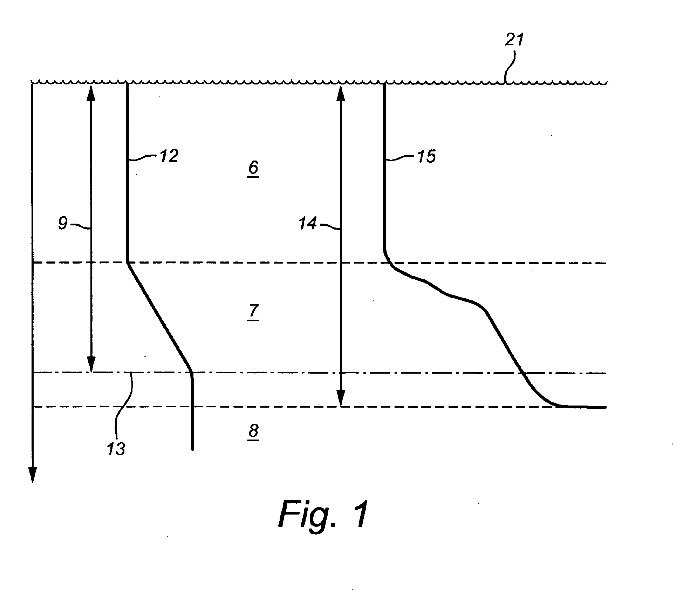

In a water channel such as a river or a harbour it is possible to distinguish substantially the layers shown in figure 1: a water layer 6, a soft silt layer 7 and a hard silt layer 8. Water layer 6 and soft silt layer 7 form a navigable upper layer, wherein the rheological transition between the upper layer (6, 7) and the lower layer 8 is located at a depth 9. When the keel of a vessel extends into the hard silt layer 8, the vessel is subject to obstruction therefrom and the vessel becomes difficult to steer. It is therefore of great importance for shipping to be able to determine the depth of the rheological transition between the navigable upper layer (6, 7) and the hard lower layer 8.

As shown in the characteristic of mass density 12 in figure 1, the mass density in water layer 6 is substantially constant. This mass density 12 gradually increases in soft silt layer 7 and is substantially constant in solid silt layer 8. The variation in mass density 12 close to boundary layer 13 of soft silt layer 7 and hard silt layer 8 shows that the mass density 12 is less suitable as parameter for accurately detecting this boundary layer 13. The differences in density above and below this boundary layer 13 are too small for this purpose. This is the reason why attempts to accurately measure nautical depth 14 via methods making use of the density have been insufficiently successful.

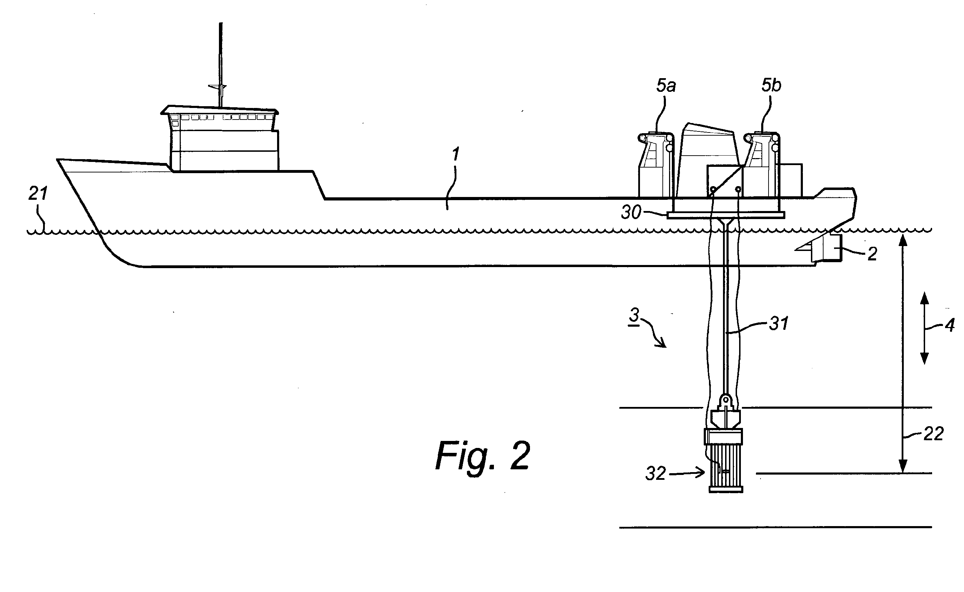

An embodiment of a device according to the invention is shown with reference to figure 2. Shown is a vessel 1 which is provided with a motor, not shown in the drawing, for driving a propeller 2 via a propeller shaft for the purpose of moving vessel 1. Also present are devices, not shown in the drawings, for steering vessel 1, such as a rudder and transversely placed propellers for facilitating manoeuvring.

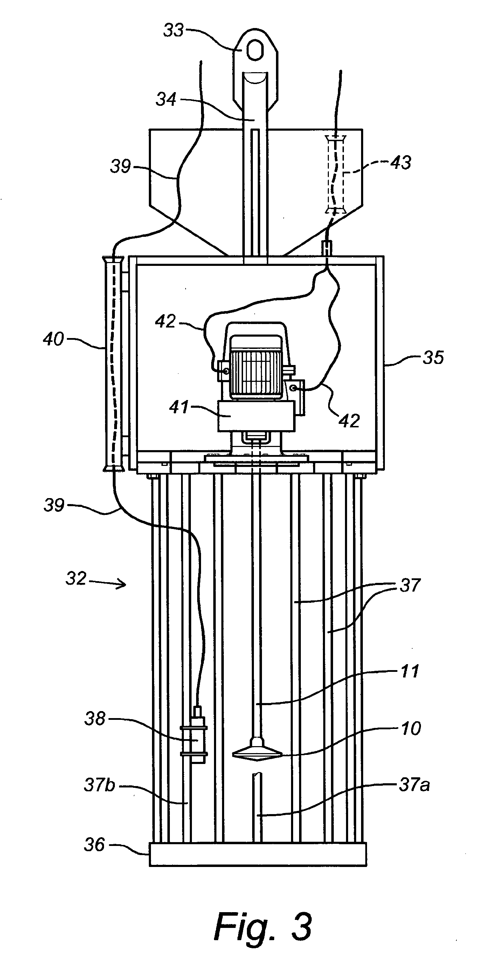

Connected to vessel 1 is a support structure 3 for introducing a measuring body 10 (see figure 3) into the fluid. In the shown embodiment support structure 3 comprises a bearing beam 30, the height of which can be varied in vertical direction 4 by means of winches (5a, 5b) present on the deck of vessel 1. Support structure 3 further comprises a flexible cable 31 with which measuring body 10 can freely set itself to a determined depth position. In another embodiment support structure 3 comprises a structure with bending stiffness, such as a rod 31, with which measuring body 10 can be brought to or moved at a predetermined adjustable depth. For the purpose of protecting measuring body 10 from waste, rocks, animals and the like present in the fluid, support structure 3 further comprises a protective construction for measuring body 10 in the form of a protective cage 32 in which measuring body 10 is accommodated. Protective cage 32 is in any case permeable to material from the water layer, the soft and the hard silt layers.

A part of support structure 3 and measuring body 10 is shown in more detail with reference to figure 3. The shown part of support structure 3 comprises a lifting eye 33 with which the shown construction is suspended from cable 31. A central rod 34 leads to a substantially watertight housing 35, which in turn connects to protective cage 32. Extending between an end plate 36 of protective cage 32 and housing 35 are a number of longitudinal rods 37 which are directed in the longitudinal direction of protective cage 32 and which form the cage (for the sake of clarity the middle longitudinal rod 37a is shown broken-away). Means for determining the depth position of measuring body 10 are connected to a longitudinal rod 37b. These take the form of a pressure sensor 38 which is connected by means of electrical wiring 39 via a guide 40 to measuring equipment present on vessel 1, such as converters, computers and computing means (not shown) for the purpose of determining the nautical depth 14 from the measured movement, the energy required therefor and the depth position of the measuring body.

The device according to the invention further comprises means for setting measuring body 10 into an autonomous movement at the depth position, this being a movement independently of a possible movement of protective cage 32 and/or vessel 1. In the shown embodiment these means comprise a rotary motor 41 adapted to set measuring body 10 into a rotation at a determined rotation speed around a rotation shaft 11 connected to rotary motor 41. The force (or torque) required can be derived in simple manner from the electric current necessary for this purpose. Provided for the purpose of controlling rotary motor 41 and transmitting the measured electric current are electrical cables 42 which are connected via a guide 43 to the measuring equipment present on vessel 1. This measuring equipment comprises, among other parts, adjusting means for the rotation speed or the torque of measuring body 10.

As shown schematically in figure 3, measuring body 10 takes the form of a double cone constructed from two conical peripheral surfaces lying with their flat sides against each other. Measuring body 10 therefore has a rotation symmetry around rotation shaft 11. It will be apparent that the form of measuring body 10 is not limited to the form shown, but can be chosen within wide limits. Good results are for instance obtained with a measuring body 10 in the form of an assembly of a plate and a single cone which lies with its top side against the flat plate. The plate is generally held stationary here and the cone rotated, wherein the intermediate space between plate and cone is accessible to the material coming from water layer 6, soft silt layer 7 and/or hard silt layer 8.

According to an embodiment of the method according to the invention, measuring body 10 is carried below water surface 21 by lowering the whole support structure 3 under water to a determined depth 22 (see figure 2). Measuring body 10 is then set into rotation around shaft 11 by rotary motor 41, wherein the rotation speed 16 at depth position 22 is held at different constant values and the current 15 (force, torque) required for this purpose is determined per constant value.

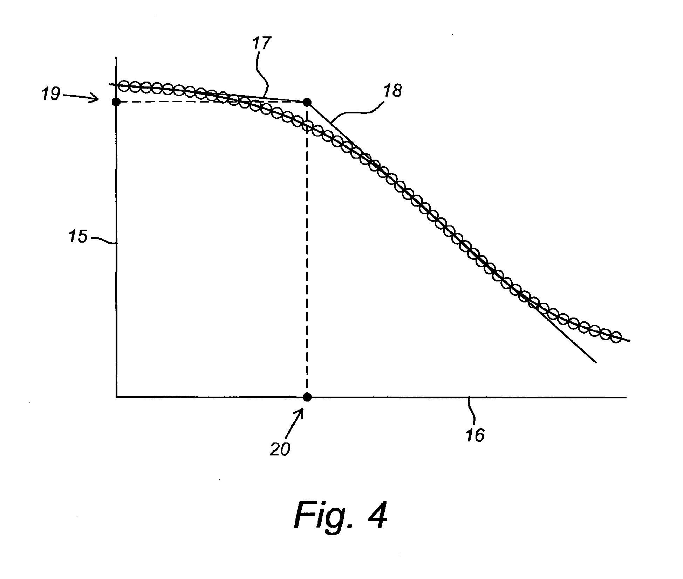

A graph typically derived from such a measurement is shown in figure 4. An apparent viscosity 15 is shown here as a function of the rotation speed 16 (or a quantity derived therefrom, such as for instance an apparent shear rate). The apparent viscosity 15 at the relevant depth 22 is determined by dividing the force (or equivalent such as electric current, mechanical torque) required to maintain a determined rotation speed 16 by the rotation speed 16 (or equivalent) per measuring point. In contrast to what is the case in the known method, a large number of measurements are performed at the same depth position 22, this enhancing the accuracy of the measurement. A representative value 19 for the viscosity can be derived from the graph by taking the intersection of tangents 17 and 18, being the tangent 17 to the first part of the curve (for low rotation speeds) and the tangent 18 to the middle part of the curve (for average rotation speeds), as indicated with the broken lines. This intersection is associated with a characteristic rotation speed 20. It is expressly noted that several methods are available for deriving characteristic values from the recorded measurement data, and that the above described method serves only by way of illustration and confirmation of the increased accuracy relative to the known method.

The depth position 22 of measuring body 10 is determined in known manner by measuring the static water pressure at the position of measuring body 10 by means of pressure sensor 38 in combination with a tube (not shown).

An advantage of the method and device according to the invention is further illustrated with reference to figure 1. Figure 1 shows the characteristic of the force 15 required to maintain the movement of measuring body 10 in the different layers (6, 7, 8). This force 15 is substantially constant in water layer 6, and increases gradually in soft silt layer 7 and has a variation which is also seen in the case of the density 12. When boundary layer 13 is crossed, the force 15 begins to increase more sharply, but upon entry into the hard silt layer 8 the force 15 increases abruptly, wherein it is even possible for the capacity of the drive (the force) of measuring body 10 to be insufficient to rotate the body at the desired rotation speed 16. The sudden increase in the force 15 (or torque) required for a predetermined rotation speed 16 gives a much more accurate indication of the depth at which the solid silt layer 8 is located. This actual depth 14 is shown in figure 1 by means of the broken line and corresponds to the nautical depth.

With the method and device according to the invention the navigable depth of a water channel can therefore be determined more accurately than is the case with the known method. As shown in figure 1, it may even be the case that the nautical depth 14 of the water channel is greater than the depth 9 measured with the known method. Deepening operations can hereby optionally be postponed or be carried out less frequently, which can save considerable cost and inconvenience.

The skilled person will appreciate that the invention is not limited to the above illustrated exemplary embodiment of the method and device according to the invention, but that modifications and variations can be made within the scope of protection defined by the appended claims. It will thus be apparent that the method and device according to the invention can also be applied in fluid masses other than for instance water masses.

## Claims

1. Method for determining the nautical depth of a water mass such as a water channel, wherein
- a measuring body (10) is immersed in the water mass to a determined depth;
- the depth position of the measuring body (10) is determined;
**characterized in that**
- the measuring body (10) is set into a number of differing stationary movements at the depth position;
- the energies required for these movements are measured; and
- the nautical depth is determined from the measured movements, the energies required therefore and the depth position of the measuring body (10).

2. Method as claimed in claim 1, **characterized in that** the movement comprises a rotation at a determined rotation speed around a rotation shaft (11) of the measuring body (10), and the force required for this movement is measured.

3. Method as claimed in claim 1, **characterized in that** the movement comprises a rotation around a rotation shaft (11) of the measuring body (10) brought about by a determined force, and the rotation speed of this movement is measured.

4. Method as claimed in claim 2 or 3, **characterized in that** the determined rotation speed or force at the depth position is held at differing constant values and the nautical depth is determined from the measured movements and the energies required therefor per constant value.

5. Method as claimed in any of the foregoing claims, **characterized in that** an apparent viscosity of the relevant layer is determined from the measured movement and the energy required therefor.

6. Method as claimed in any of the foregoing claims, **characterized in that** the depth position is determined by measuring the static water pressure at the location of the measuring body.

7. Method as claimed in any of the foregoing claims, **characterized in that** the measuring body (10) is introduced into the water mass by means of a support structure (3) connected to a vessel (1).

8. Method as claimed in claim 7, **characterized in that** the measuring body (10) is pulled along in the water mass by the support structure (3) at a predetermined speed in the navigating direction of the vessel (1).

9. Device for determining the nautical depth of a water mass according to a method , as claimed in any of the foregoing claims, **characterized in that** the device comprises
- a measuring body (10) and means for immersing the measuring body in the water mass at a determined depth;
- means (38, 39, 40) for determining the depth position of the measuring body;
- means (41) for setting the measuring body (10) into a number of differing movements at the depth position;
- means for measuring the energies required for these movements; and
- computing means for determining the nautical depth from the measured movements, the energies required therefore and the depth position of the measuring body.

10. Device as claimed in claim 9, **characterized in that** the means for setting the measuring body into movement comprise means for setting the measuring body into rotation at a determined rotation speed (16) around a rotation shaft (11) of the measuring body (10), and the means for measuring the energy required for this movement comprise means for measuring the force (15) required for this movement.

11. Device as claimed in claim 9 or 10, **characterized in that** the means for setting the measuring body (10) into movement comprise means for setting the measuring body into rotation around a rotation shaft (11) of the measuring body (10) by means of a determined force (15), and the means for measuring the energy required for this movement comprise means for measuring the rotation speed (16) of this movement.

12. Device as claimed in any one of claims 9-11, **characterized in that** the means for setting the measuring body into rotation at a determined rotation speed (16) around a rotation shaft (11), or the means for setting the measuring body into rotation around a rotation shaft (11) of the measuring body (10) by means of a determined force (15) are adapted to hold the determined rotation speed (16) or force (15) at the depth position at differing constant values and the nautical depth is determined from the measured movements and the energies required therefor per constant value.

13. Device as claimed in any one of claims 9-12, **characterized in that** the means (38, 39, 40) for determining the depth position of the measuring body (10) comprise static water pressure measuring means.

14. Device as claimed in any of the claims 9-13, **characterized in that** the device comprises a support structure (3) connected to a vessel (1) for the purpose of introducing the measuring body (10) into the water mass.

## Patentansprüche

1. Verfahren zur Bestimmung der nautischen Tiefe einer Wassermasse wie beispielsweise eines Wasserkanals, wobei
- ein Messkörper (10) bis zu einer festgelegten Tiefe in die Wassermasse eingetaucht wird;
- die Tiefenposition des Messkörpers (10) bestimmt wird;
**dadurch gekennzeichnet, dass**
- der Messkörper (10) in der Tiefenposition in eine Reihe von unterschiedlichen ortsfesten Bewegungen gesetzt wird;
- die für diese Bewegungen benötigten Energien gemessen werden; und
- die nautische Tiefe anhand der gemessenen Bewegungen, der dafür benötigten Energien und der Tiefenposition des Messkörpers (10) bestimmt wird.

2. Verfahren nach Anspruch 1, **dadurch gekennzeichnet, dass** die Bewegung eine Umdrehung um eine Drehwelle (11) des Messkörpers (10) bei einer festgelegten Drehgeschwindigkeit aufweist und die für diese Bewegung benötigte Kraft gemessen wird.

3. Verfahren nach Anspruch 1, **dadurch gekennzeichnet, dass** die Bewegung eine durch eine festgelegte Kraft bewirkte Umdrehung um eine Drehwelle (11) des Messkörpers (10) aufweist und die Drehgeschwindigkeit dieser Bewegung gemessen wird.

4. Verfahren nach Anspruch 2 oder 3, **dadurch gekennzeichnet, dass** die festgelegte Drehgeschwindigkeit oder Kraft bei unterschiedlichen konstanten Werten an der Tiefenposition beibehalten wird und die nautische Tiefe anhand der gemessenen Bewegungen und der dafür benötigten Energien pro konstantem Wert bestimmt wird.

5. Verfahren nach einem der vorherigen Ansprüche, **dadurch gekennzeichnet, dass** anhand der gemessenen Bewegung und der dafür benötigten Energie eine scheinbare Viskosität der maßgeblichen Schicht bestimmt wird.

6. Verfahren nach einem der vorherigen Ansprüche, **dadurch gekennzeichnet, dass** die Tiefenposition durch Messen des statischen Wasserdrucks am Standort des Messkörpers bestimmt wird.

7. Verfahren nach einem der vorherigen Ansprüche, **dadurch gekennzeichnet, dass** der Messkörper (10) durch eine mit einem Schiff (1) verbundenen Stützstruktur (3) in die Wassermasse hineingeführt wird.

8. Verfahren nach Anspruch 7, **dadurch gekennzeichnet, dass** der Messkörper (10) mit einer zuvor festgelegten Geschwindigkeit von der Stützstruktur (3) in Fahrtrichtung des Schiffes (1) in der Wassermasse entlang gezogen wird.

9. Vorrichtung zur Bestimmung der nautischen Tiefe einer Wassermasse gemäß einem Verfahren nach einem der vorherigen Ansprüche, **dadurch gekennzeichnet, dass** die Vorrichtung aufweist
- einen Messkörper (10) und Mittel zum Eintauchen des Messkörpers in die Wassermasse bei einer festgelegten Tiefe;
- Mittel (38, 39, 40) zum Bestimmen der Tiefenposition des Messkörpers;
- ein Mittel (41) zum in Bewegung Setzen des Messkörpers (10) in eine Reihe von unterschiedlichen Bewegungen in der Tiefenposition;
- ein Mittel zum Messen der für diese Bewegungen benötigten Energien; und
- ein Berechnungsmittel zum Bestimmen der nautischen Tiefe anhand der gemessenen Bewegungen, der dafür benötigten Energien und der Tiefenposition des Messkörpers.

10. Vorrichtung nach Anspruch 9, **dadurch gekennzeichnet, dass** das Mittel zum in Bewegung Setzen des Messkörpers ein Mittel zum in Umdrehung Setzen des Messkörpers um eine Drehwelle (11) des Messkörpers (10) bei einer festgelegten Drehgeschwindigkeit (16) aufweist, und das Mittel zum Messen der für diese Bewegung benötigten Energie ein Mittel zum Messen der für diese Bewegung benötigten Kraft (15) aufweist.

11. Vorrichtung nach Anspruch 9 oder 10, **dadurch gekennzeichnet, dass** das Mittel zum in Bewegung Setzen des Messkörpers (10) ein Mittel zum in Umdrehung Setzen des Messkörpers um eine Drehwelle (11) des Messkörpers (10) durch eine festgelegte Kraft (15) aufweist, und das Mittel zum Messen der für diese Bewegung benötigten Energie ein Mittel zum Messen der Drehgeschwindigkeit (16) dieser Bewegung aufweist.

12. Vorrichtung nach einem der Ansprüche 9 bis 11, **dadurch gekennzeichnet, dass** das Mittel zum in Umdrehung Setzen des Messkörpers um eine Drehwelle (11) bei einer festgelegten Drehgeschwindigkeit (16) oder das Mittel zum in Umdrehung Setzen des Messkörpers um eine Drehwelle (11) des Messkörpers (10) durch eine festgelegte Kraft (15) so ausgelegt ist, dass die festgelegte Drehgeschwindigkeit (16) oder Kraft (15) bei unterschiedlichen konstanten Werten in der Tiefenposition beibehalten wird und die nautische Tiefe anhand der gemessenen Bewegungen und der dafür benötigten Energien pro konstantem Wert bestimmt wird.

13. Vorrichtung nach einem der Ansprüche 9 bis 12, **dadurch gekennzeichnet, dass** die Mittel (38, 39, 40) zum Bestimmen der Tiefenposition des Messkörpers (10) ein Mittel zum Messen des statischen Wasserdrucks aufweisen.

14. Vorrichtung nach einem der Ansprüche 9 bis 13, **dadurch gekennzeichnet, dass** die Vorrichtung eine mit einem Schiff (1) verbundene Stützstruktur (3) zum Hineinführen des Messkörpers (10) in die Wassermasse aufweist.

## Revendications

1. Procédé servant à déterminer la profondeur marine d'une masse d'eau telle qu'un chenal, dans lequel :
- on immerge un corps de mesure (10) dans la masse d'eau à une profondeur déterminée ;
- on détermine la position bathymétrique du corps de mesure (10),
**caractérisé en ce que** :
- on imprime au corps de mesure (10) un certain nombre de mouvements stationnaires à la position bathymétrique ;
- on mesure les énergies requises par ces mouvements, et
- on détermine la profondeur marine à partir des mouvements mesurés, des énergies requises par ceux-ci et de la position bathymétrique du corps de mesure (10).

2. Procédé selon la revendication 1, **caractérisé en ce que** le mouvement consiste en une rotation à une vitesse de rotation déterminée autour d'un arbre de rotation (11) du corps de mesure (10) et **en ce que** l'on mesure la force requise par ce mouvement.

3. Procédé selon la revendication 1, **caractérisé en ce que** le mouvement consiste en une rotation autour d'un arbre de rotation (11) du corps de mesure (10) provoquée par une force déterminée et **en ce que** l'on mesure la vitesse de rotation de ce mouvement.

4. Procédé selon la revendication 2 ou 3, **caractérisé en ce que** l'on maintient la vitesse de rotation ou la force déterminée à la position bathymétrique à différentes valeurs constantes et **en ce que** l'on détermine la profondeur marine à partir des mouvements mesurés et des énergies requises par ceux-ci, par valeur constante.

5. Procédé selon l'une quelconque des revendications précédentes, **caractérisé en ce que** l'on détermine une viscosité apparente de la couche pertinente à partir du mouvement mesuré et de l'énergie requise par celui-ci.

6. Procédé selon l'une quelconque des revendications précédentes, **caractérisé en ce que** l'on détermine la position bathymétrique en mesurant la pression hydrostatique à l'emplacement du corps de mesure.

7. Procédé selon l'une quelconque des revendications précédentes, **caractérisé en ce que** l'on introduit le corps de mesure (10) dans la masse d'eau au moyen d'une structure de support (3) reliée à un navire (1).

8. Procédé selon la revendication 7, **caractérisé en ce que** le corps de mesure (10) est tiré dans la masse d'eau par la structure de support (3) à une vitesse prédéterminée dans le sens de navigation du navire (1).

9. Dispositif servant à déterminer la profondeur marine d'une masse d'eau conformément à un procédé selon l'une quelconque des revendications précédentes, **caractérisé en ce que** le dispositif comprend :
- un corps de mesure (10) et des moyens servant à immerger le corps de mesure dans la masse d'eau à une profondeur déterminée ;
- des moyens (38, 39, 40) servant à déterminer la position bathymétrique du corps de mesure ;
- un moyen (41) servant à imprimer au corps de mesure (10) un certain nombre de mouvements différents à la position bathymétrique ;
- des moyens servant à mesurer les énergies requises par ces mouvements, et
- des moyens de calcul servant à déterminer la profondeur marine à partir des mouvements mesurés, des énergies requises par ceux-ci et de la position bathymétrique du corps de mesure.

10. Dispositif selon la revendication 9, **caractérisé en ce que** les moyens servant à mettre le corps de mesure en mouvement consistent en moyens servant à mettre le corps de mesure en rotation à une vitesse de rotation (16) déterminée autour d'un arbre de rotation (11) du corps de mesure (10) et **en ce que** les moyens servant à mesurer l'énergie requise par ce mouvement consistent en moyens servant à mesurer la force (15) requise par ce mouvement.

11. Dispositif selon la revendication 9 ou 10, **caractérisé en ce que** les moyens servant à mettre le corps de mesure (10) en mouvement consistent en moyens servant à mettre le corps de mesure en rotation autour d'un arbre de rotation (11) du corps de mesure (10) au moyen d'une force déterminée (15) et **en ce que** les moyens servant à mesurer l'énergie requise par ce mouvement consistent en moyens servant à mesurer la vitesse de rotation (16) de ce mouvement.

12. Dispositif selon l'une quelconque des revendications 9-11, **caractérisé en ce que** les moyens servant à mettre le corps de mesure en rotation à une vitesse de rotation (16) déterminée autour d'un arbre de rotation (11) ou les moyens servant à mettre le corps de mesure en rotation autour d'un arbre de rotation (11) du corps de mesure (10) au moyen d'une force (15) déterminée sont adaptés pour maintenir la vitesse de rotation (16) ou la force (15) déterminée à la position bathymétrique à différentes valeurs constantes et **en ce que** l'on détermine la profondeur marine à partir des mouvements mesurés et des énergies requises par ceux-ci, par valeur constante.

13. Dispositif selon l'une quelconque des revendications 9-12, **caractérisé en ce que** les moyens (38, 39, 40) servant à déterminer la position bathymétrique du corps de mesure (10) comprennent des moyens de mesure de la pression hydrostatique.

14. Dispositif selon l'une quelconque des revendications 9-13, **caractérisé en ce que** le dispositif comprend une structure de support (3) reliée à un navire (1) dans le but d'introduire le corps de mesure (10) dans la masse d'eau.
